# EUROPÄISCHE PATENTANMELDUNG

(11) **EP 0 937 955 A1**
(43) Veröffentlichungstag der Anmeldung: **25.08.1999**
(21) Anmeldenummer: 99101101.6
(22) Anmeldetag: 21.01.1999
(51) Int. Cl.: F26B 3/30, F26B 21/00

(54) **Strahlungswärme-Trocknungssystem**

(30) Priorität: 19.02.1998 DE 19806925
(71) Anmelder: Schröck, Dietrich, 86356 Neussäs (DE)
(72) Erfinder: Schröck, Dietrich, 86356 Neussäs (DE)
(74) Vertreter: Gallo, Wolfgang, Dipl.-Ing. (FH)

(57) **Zusammenfassung**

Trocknungssystem mit einer von Trocknungsluft durchströmten Trocknungskammer (1) zur Aufnahme des zu trocknenden Guts und einem mit Strahlungswärme arbeitenden Luftheizaggregat (3) zum Heizen der Trocknungsluft mit mindestens einem Hell- oder Dunkelstrahler, beispielsweise einem schwarzen Rohr (6), zur Abstrahlung von Wärme auf im Luftheizkanal angeordnete Wärmetauscherelemente (18), wobei das schwarze Rohr sich durch die Trocknungskammer hindurcherstrecken kann.

## Beschreibung

Die Erfindung betrifft ein mit Strahlungswärme arbeitendes Trocknungssystem, das für industrielle Trocknungsprozesse aller Art einsetzbar ist.

Beispielsweise kann das erfindungsgemäße Trocknungssystem Anwendung finden in Trocknungsanlagen auf dem Gebiet der Textilveredelung, beispielsweise für Spann-, Trocken- und Fixieranlagen und zur Flockentrocknung, weiter auf dem Gebiet der Land- und Forstwirtschaft beispielsweise zur Holztrocknung, Getreidetrocknung, Dörrfleisch- und Dörrobstproduktion, Zuckerherstellung und Kräutertrocknung, für Trocknungsvorgänge bei der Papierherstellung, bei der Produktion von Klein- und Normteilen, bei der Behandlung von Rückständen aus der Abwasseraufbereitung, und im Bauwesen, z.B. der Produktion von Betonfertigteilen.

Aufgabe der Erfindung ist es, ein neuartiges Trocknungssystem für industrielle Trocknungsprozesse aufzuzeigen, das sich durch besondere Wirtschaftlichkeit auszeichnet. Denn gegenwärtig werden Trocknungsprozesse gewöhnlich mit Wärmeenergie durchgeführt, die in einem zentralen Heizwerk erzeugt wird und oft über lange Strecken mit entsprechenden Verlusten zu den Aggregaten transportiert werden muß, wo sie zum Einsatz kommen soll. Die Erfindung soll dagegen ein System schaffen, das eine dezentrale Energiebereitstellung durch aggregatsbezogene Strahlungswärmeerzeugung an Ort und Stelle des jeweiligen Trocknungsprozesses ermöglicht.

Zur Lösung dieser Aufgabe beinhaltet die Erfindung ein Strahlungswärme-Trocknungssystem, das einen Luftstrom durch Hell- oder Dunkelstrahler erwärmt und die so erzeugte heiße Luft durch den Trocknungsbereich führt. Das erfindungsgemäße System ist im Patentanspruch 1 in seinen wesentlichen Merkmalen definiert und kann entsprechend den Unteransprüchen in vorteilhafter Weise weiter ausgestaltet sein.

Die Erfindung wird nachstehend anhand eines Ausführungsbeispiels unter Bezugnahme auf die anliegenden Zeichnungen mehr im einzelnen beschrieben. In den Zeichnungen zeigt:
- Fig. 1: eine schematische Darstellung des Gesamtsystemens nach der Erfindung, und
- Fig. 2: in schematischer Darstellung ein Strahlungswärme-Luftheizaggregat des in Fig. 1 dargestellten Systems.

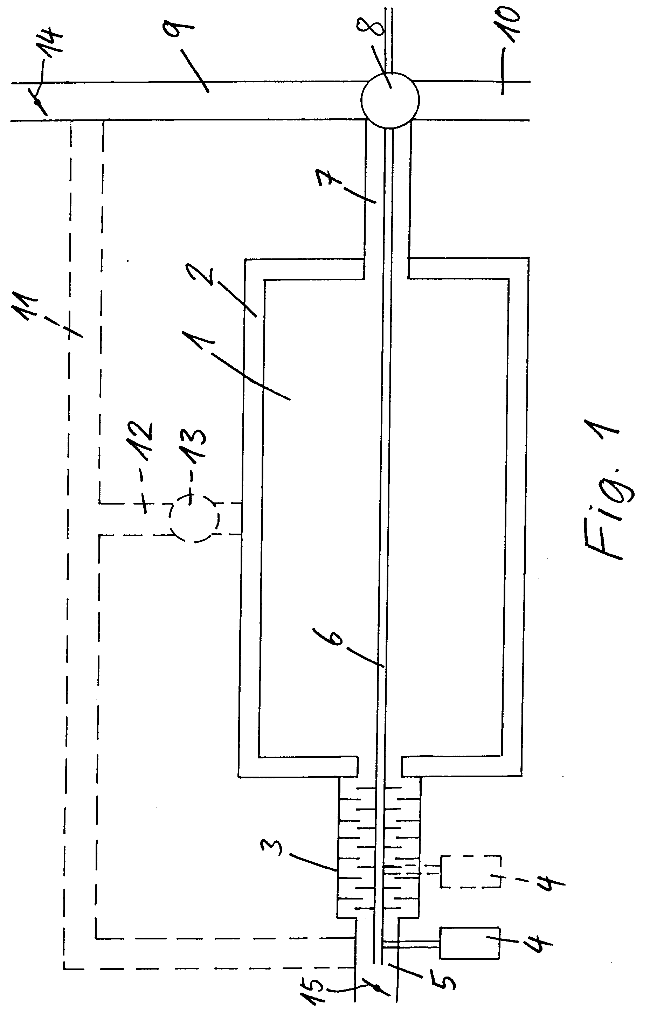

Das in Fig. 1 dargestellte Gesamtsystem einer Strahlungswärme-Trocknungsanlage nach der Erfindung besteht aus einer Trocknungskammer 1 mit isolierten Wänden 2, einem Luftheizaggregat 3 mit mindestens einem Brenner 4, einem zum Luftheizaggregat 3 führenden Zuluftkanal 5, einem durch das Luftheizaggregat 3 führenden und Bestandteil desselben bildenden sowie durch die Trocknungskammer 1 hindurchführenden schwarzen Rohr 6, einer Abkühl- und Kondensationsstrecke 7, einem Saugzuggebläse 8, einem Abluftkanal 9, einem Kondensatablaß 10, gegebenenfalls einem Luftrückführkanal 11, weiter gegebenenfalls einem Querstromkanal 12 mit einem Querstromgebläse 13, einer Regelklappe 14 im Abluftkanal und einer Regelklappe 15 im Zuluftkanal 5.

Fig. 1 zeigt damit bereits beide möglich Systemvarianten, nämlich die Ausbildung des Systems als offenes System, und die Ausbildung des Systems als geschlossenes System.

Bei der Ausführung als offenes System tritt Luft durch den Zuluftkanal 15 in das Luftheizaggregat 3 ein, wird dort erhitzt, durchströmt die isolierte Trocknungskammer 1, in welchem das zu trocknende Gut sich befindet, nimmt von dem zu trocknenden Gut Feuchtigkeit auf, durchströmt die Kühl- und Kondensationsstrecke 7, und tritt durch den Abluftkanal 9 aus. Bei der Ausbildung des Systems als offenes System könnte allerdings auf eine Abkühl- und Kondensationsstrecke 7 verzichtet werden und die feuchte Luft mit ihrer gesamten Feuchte ohne Kondensatabscheidung über den Abluftkanal 9 abgeführt werden. Dies kann im Hinblick auf eine wünschenswerte Wärmerückgewinnung aus der Abluft allerdings weniger vorteilhaft sein; ebenso dann, wenn die Feuchtigkeit mit Schadstoffen befrachtet ist, so daß eine Kondensatabscheidung mit einer möglichen Schadstofftrennung die bessere Lösung darstellt.

Bei der Ausbildung des Systems als geschlossenes System findet eine Luftrückführung aus dem Abluftkanal 9 über den Luftrückführkanal 11 zum Zuluftkanal 15 statt. In diesem Fall ist es selbstverständlich notwendig, daß die Abkühl- und Kondensationsstrecke 7 vorgesehen ist, in welcher zumindest der wesentliche Teil der in der Abluft mitgeführten Feuchtigkeit kondensiert wird und durch den Kondensatauslaß 10 abfließen kann, während die wieder weitgehend trockene Luft durch den Luftrückführkanal 11 zum Zuluftkanal 15 zurückgeführt wird. Ein Teil der Abluft kann dabei durch den Abluftkanal 9 in die Außenluft abgelassen werden, wobei das Verhältnis von rückgeführter Luft und abgelassener Luft durch die Regelklappe 14 im Abluftkanal stromab der Abzweigung des Rückführkanals einstellbar ist. Ebenso kann zusätzlich zu der rückgeführten Luft auch Frischluft durch den Zuluftkanal 5 in das Luftheizaggregat 3 eintreten, wobei auch hier das Verhältnis von Frischluft zu Rückführungsluft am Einlaß des Luftheizaggregats durch die im Zuluftkanal 5 angeordnete Regelklappe 15 einstellbar ist.

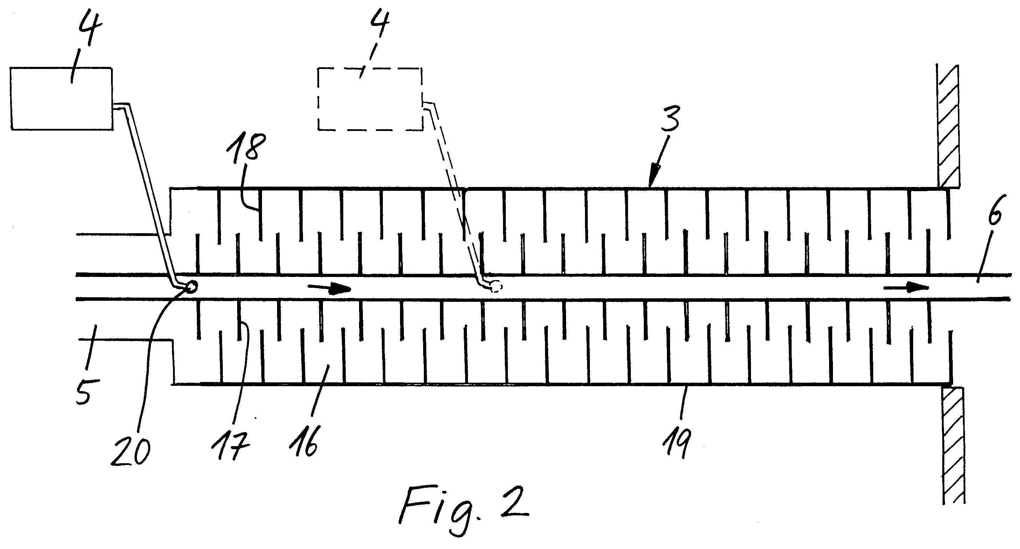

Das Luftheizaggregat 3 ist in Fig. 2 deutlicher dargestellt. Grundsätzlich kan das Luftheizaggregat als Strahlungswärme-Heizaggregat mit Hell- oder Dunkelstrahlern als Wärmestrahlungsquelle arbeiten. Beim dargestellten Ausführungsbeispiel arbeitet das Luftheizaggregat 3 nach dem Dunkelstrahler-Wärmetauscherprinzip.

Dazu weist das Luftheizaggregat 3 mindestens einen Brenner 4 auf, der eine Brennflamme und einen heißen Abgasstrom in einem schwarzen Rohr erzeugt. Das schwarze Rohr weist an seinem stromaufseitigen Ende einen Lufteinlaß für den Eintritt von Verbrennungsluft auf. Im schwarzen Rohr 6 ist an der Brennerdüse des Brenners 4 ein Zünder 20 angeordnet, um die Brennflamme zu zünden. An seinem stromabwärtigen Ende führt das schwarze Rohr 6 (siehe Fig. 1) in einen (nicht dargestellten) Abgasschornstein. Der Zug im schwarzen Rohr 6 wird vorzugsweise durch ein an seinem Austrittsende oder im Abgasschornstein angeordnetes (nicht dargestelltes) Sauggebläse erzeugt, wodurch eine langgezogene Flamme geschaffen wird, aber es kann auch ein Druckgebläse am Einlaß des schwarzen Rohrs 6 vorgesehen sein.

Das schwarze Rohr 6 wird von dem durch den mindestens einen Brenner 4 erzeugten heißen Abgasstrom, erhitzt und strahlt im Luftheizaggregat 3 sowie in seinem weiteren Verlauf durch die Trocknungskammer 1 Wärme ab.

Wie aus Fig. 2 ersichtlich ist, können mehrere Brenner 4 in Abständen mit ihren Abgaskanälen nacheinander mit dem schwarzen Rohr 6 verbunden sein. Das Luftheizaggregat 3 besteht weiter aus einem das schwarze Rohr 6 umgebenden labyrinthartigen Luftkanal 16. Das Strömungslabyrinth für die das Luftheizaggregat 3 durchströmende Luft ist dadurch gebildet, daß rippenförmige Innenlamellen 17 am schwarzen Rohr und ebenfalls rippenförmige Außenlamellen 18 an der Mantelwand 19 des Luftheizaggregats 3 in Luftströmungsrichtung miteinander abwechselnd und miteinander verschachtelt angeordnet sind. Dabei sind die Innenlamellen 17 ebenso wie das schwarze Rohr 6 selbst schwarz ausgebildet, da sie die Aufgabe haben, zusammen mit dem schwarzen Rohr Wärme abzustrahlen, während die Außenlamellen 18 vorzugsweise aus poliertem Edelstahl bestehen, da sie die Aufgabe haben, Strahlung aufzunehmen und zu reflektieren. Vorzugsweise ist die Geometrie der Lamellen im Luftheizaggregat 3 so gewählt, daß die Innenlamellen 17 in ihrer radialen Ausdehnung etwa 20 % kürzer sind als die Außenlamellen 18. Die Außenwand 19 des Luftheizaggregats 3 ist selbstverständlich wärmeisoliert, was nicht besonders dargestellt ist. Ebenso wie die Innenlamellen 18 ist auch die Innenfläche der Mantelwand 19 des Luftheizaggregats 3 vorzugsweise aus poliertem Edelstahl gebildet, um Strahlungswärme aufzunehmen und zu refklektieren. Die das Luftheizaggregat durchströmende, durch den Zuluftkanal 5 eintretende und dann in die Trocknungskammer 1 austretende Luft durch-strömt das durch die Innenlamellen 17 und Außenlamellen 18 gebildete Labyrinth, wobei die Innenlamellen 17 und die Außenlamellen 18 als Wärmetauscherelemente wirken und Wärme an die hindurchströmende Luft abgeben. Die Innenlamellen werden dabei ihrerseits durch Wärmeleitung von den schwarzen Rohr erwärmt, während die Außenlamellen und die Innenfläche der Mantelwand 19 durch Wärmestrahlung von schwarzen Rohr und von den Innenlamellen erwärmt werden.

Die Flammentemperatur bzw. die ursprüngliche Heißgastemperatur im schwarzen Rohr liegt vorzugsweise im Bereich von etwa 700°C bis 900°C. Die Austrittstemperatur der Trocknungluft aus dem Luftheizaggregat in die Trocknungskammer kann vorzugsweise im Bereich von 180°C bis etwa 380°C liegen. Welche Temperatur konkret im jeweiligen Anwendungsfall gewählt wird, hängt selbstverständlich vom Einsatzbereich und dem zu trocknenden Gut ab. Die gewünschte Temperatur kann, wie leicht ersichtlich ist, durch Wahl der entsprechenden Betriebsparameter und deren relative Abstimmung eingestellt werden, also beispielsweise durch entsprechende Abstimmung von Luftdurchsatz, Geometrie einschließlich Länge und Weite des labyrinthartigen Luftkanals im Luftheizaggregat 3 sowie der Lamellen, Energiezufuhr zum schwarzen Rohr usw.

Für das Luftheizaggregat 3 spielt auch die Materialwahl eine Rolle. Die Innenlamellen, die aktive Wärmetauscherflächen bilden, die mit dem schwarzen Rohr 6 in wärmeleitender Verbindung stehen, sollten aus einem gut wärmeleitenden Material bestehen, während die Außenlamellen, die passive Wärmetauscherflächen bilden, aus einem schlecht wärmeleitenden Material bestehen können, beispielsweise, wie schon gesagt, aus Edelstahl.

Die isolierte Wand 2 der Trocknungskammer 1 kann im Hinblick auf den jeweiligen Anwendungsbereich unterschiedlich ausgebildet sein. Die Wand kann beispielsweise aus keramischem Material, beispielsweise auch aus Schamottematerial, gebaut sein, was dann sinnvoll ist, wenn Wärmespeicherung und Nachheizeigenschaften gewünscht sind. Dies gilt insbesondere bei länger andauernden Trocknungsprozessen, beispielsweise beim Trocken von Holz, wo die Feuchtigkeit langsam und schonend bei längerer Verweildauer des betreffenden Produkts in der Trocknungskammer entzogen werden soll. Ist eine schnelle Trocknung erwünscht, kann die Wand 2 eine Innenhaut aus Edelstahl haben und reflektierend ausgebildet sein, um die Temperatur in der Trocknungskammer durch Strahlungsreflektion zu steigern.

Die Trocknungskammer 1 kann als chargenweise beschickbare Kammer ausgebildet sein, in welcher das zu trocknende Gut ruhend oder innerhalb der Kammer bewegt aufgenommen wird, oder die Trocknungskammer kann als Durchlaufkammer ausgebildet sein, durch welche zu trocknendes Gut mit wählbarer Geschwindigkeit von einem Einlaßende zu einem Auslaßende hindurchtransportiert wird.

Wird in der Trocknungskammer ein Querstrom gewünscht, kann, wie in Fig. 1 dargestellt ist, ein Querstromkanal 12 vor gesehen sein, durch welchen Luft durch ein Querstromgebläse 13 hindurchgeführt wird, um in der Trocknungskammer einen Querstrom zu erzeugen, um je nach Bedarf die gewünschten Verhältnisse in der Trocknungskammer zu schaffen. Durch eine so erzeugte Luftverwirbelung in der Trochnungskammer kann der Trocknungsprozeß intensiviert und auch größere Gleichförmigkeit erreicht werden

Die in Fig. 1 gestrichelt eingezeichnete Möglichkeit der Ausbildung des Systems als (nicht vollkommen) geschlossenes System kann so modifiziert werden, daß das System auch als vollkommen geschlossenes System arbeiten kann. Das kann von Vorteil sein, wenn mit Unterdruck gearbeitet werden soll. Allgemein bietet das geschlossene System die Möglichkeit variabler Druckverhältnisse im Trocknungsbereich und besser stabilisierbarer und auch höherer Temperaturen. Durch gesteigerten Luftaustausch ist es möglich, auch den Durchsatz mit zu trocknendem Gut wesentlich zu steigern. Dies kann bei einfachen Trocknungsprozessen vorteilhaft sein, wo anspruchslose Trocknungsobjekte unempfindlich gegen schnellen Feuchtigkeitsentzug sind.

Bei der Ausbildung des Systems als offenes System liegt ein Energieverbrauchsvorteil in der "Zwangsunterdruckzone" im Trocknungsbereich. Der Trocknungseffekt ist dadurch niedriger, was aber für hochwertige anspruchsvollere Trocknungsobjekte von Vorteil ist.

Das System kann im Hinblick auf einen breiten Betriebsbereich mit variablen Betriebsparametern ausgelegt sein. Beispielsweise kann im Luftheizaggregat 3 der um das schwarze Rohr 6 herum verlaufende Luftheizkanal in 2 parallele, jeweils im Querschnitt halbkreisförmige Teilkanäle oder auch Mehrteilkanäle unterteilt sein, die jeweils mit Hilfe von Stellklappen wahlweise zu- oder abschaltbar sind, um eine Grobeinstellung des Luftdurchsatzes und damit der Trocknungsheizleistung zu ermöglichen.

Des weiteren können Brennerleistung, Drehzahlen der verschiedenen Gebläse, Stellklappenpositionen usw. und damit die Prozeßverhältnisse wie Luftdurchsatz, Trocknungslufttemperatur, Luftrückführungsgrad, usw. mit Hilfe von Prozeßrechnern bzw. computermäßig gesteuert, überwacht und geregelt werden, um je nach Bedarf die geeigneten Trocknungsprozeßparameter zu erzeugen und aufrecht zu erhalten.

## Patentansprüche

1. Strahlungswärme-Trocknungssystem, mit einer von Trocknungsluft durchströmten Trocknungskammer(1) zur Aufnahme des zu trocknenden Guts, und aus einem Strahlungswärme-Luftheizaggregat (3) zum Erwärmen der Trocknungsluft, wobei das Luftheizaggregat mindestens einen Hell- oder Dunkelstrahler (6) aufweist, der Wärme in einen von der Trocknungsluft durchströmten Luftheizkanal und auf darin angeordnete Wärmetauscherelemente (17, 18) abstrahlt.

2. Trocknungssystem nach Anspruch 1, dadurch gekennzeichnet, daß ein Sauggebläse (8), das in einem aus der Trocknungskammer führenden Abluftkanal (7, 9) angeordnet ist, die Trocknungsluft durch das Luftheizaggregat (3) und die Trocknungskammer (1) hindurchsaugt.

3. Trocknungssystem nach Anspruch 1 oder 2, dadurch gekennzeichnet, daß das Luftheizaggregat (3) einen Dunkelstrahler in Form eines schwarzen Rohrs (6) aufweist, das innen durch heiße Verbrennungsgase erhitzt wird und außen mit in den Luftheizkanal hineinragenden wärmeabstrahlenden Rippen oder Lamellen (17) versehen ist, und daß der umgebende Luftheizkanal seinerseits mit Rippen bzw. Lamellen (18) versehen ist, die zwischen die am schwarzen Rohr gebildeten Rippen bzw. Lamellen hineinragen, um einen labyrinthartigen Strömungskanal zu bilden.

4. Trocknungssystem nach Anspruch 3, dadurch gekennzeichnet, daß die am Luftheizkanal angeordneten Rippen bzw. Lamellen (18) reflektierend ausgebildet sind.

5. Trocknungssystem nach Anspruch 3 oder 4, dadurch gekennzeichnet, daß das schwarze Rohr (6) sich auch durch die Trocknungskammer (1) hindurcherstreckt.

6. Trocknungssystem nach Anspruch 1 oder 2, dadurch gekennzeichnet, daß das Luftheizaggregat mindestens einen Hellstrahler aufweist und die im Luftheizkanal angeordneten Wärmetauscherelemente als Keramik- oder Metallkörper ausgebildet sind.

7. Trocknungssystem nach einem der Ansprüche 1 bis 6, dadurch gekennzeichnet, daß die Wand (19) des Luftheizkanals des Luftheizaggregats (3) strahlungsreflektierend ausgebildet ist.

8. Trocknungssystem nach einem der Ansprüche 1 bis 7, dadurch gekennzeichnet, daß der aus der Trocknungskammer (1) führende Abluftkanal eine Abkühl- und Kondensationsstrecke (7) mit anschließender Kondensatabscheidung anschließt.

9. Trocknungssystem nach Anspruch 8, dadurch gekennzeichnet, daß ein Luftrückführungskanal (11) vom Abluftkanal stromab der Kondensatabscheidung zum Lufteinlaß (5) des Luftheizaggregats (3) verläuft, der gegebenenfalls mit einem in die Trocknungskammer (1) mündenden Querstromkanal (12) verbunden ist.

10. Trocknungssystem nach einem der Ansprüche 1 bis 9, dadurch gekennzeichnet, daß der Luftheizkanal im Luftheizaggregat (3) in mindestens 2 parallele Teilkanäle unterteilt ist.
